# EUROPEAN PATENT SPECIFICATION

(11) **EP 2 171 361 B1**
(45) Date of publication and mention of the grant of the patent: **28.11.2018**
(21) Application number: 08775518.7
(22) Date of filing: 27.06.2008
(51) Int. Cl.: F24F 1/02, F25B 29/00, F24F 12/00, F24D 15/04, F24D 17/02, F24D 17/00, F24D 5/12

(54) **AIR SUPPLY UNIT**
LUFTZUFUHREINHEIT
UNITÉ D'ALIMENTATION D'AIR

(30) Priority: 27.06.2007 FI 20075491; 30.08.2007 FI 20075595
(43) Date of publication of application: 07.04.2010
(73) Proprietor: Enervent Oy, 06150 Porvoo (FI)
(72) Inventor: KRONVALL, Petter, FI-06100 Borgå (FI); PALMGREN, Tom, FI-06100 Borgå (FI); SÖDERHOLM, Jan, FI-06100 Borgå (FI)
(74) Representative: Papula Oy
(86) International application number: PCT/FI2008/050393
(87) International publication number: WO 2009/000974

(56) References cited:
- EP-A1- 0 055 000
- DE-A1- 10 058 273
- DE-C1- 19 913 861
- FR-A1- 2 355 248
- US-A- 4 655 278
- US-A- 5 551 245
- US-A- 5 579 647
- US-A- 6 038 879
- US-A1- 2004 134 211
- US-A1- 2006 201 183
- US-B1- 6 247 323

## Description

The object of the invention is an air supply unit for extracting heat energy from a stream of air (e.g. exhaust air) and transferring the heat energy to another stream of air (e.g. supply air) according to the preamble of claim 1.

The air supply unit for extracting heat energy from a stream of air and transferring the heat energy to another stream of air according to the invention is intended for example for heating supply air and/or warm service water, for instance by using heat energy of exhaust air of a building.

Numerous air supply units for heating supply air by using heat energy of exhaust air of a building according to the preamble of claim 1 are previously known. These units are also referred to as air supply units equipped with a heat recovery unit. The common feature of the known air supply units is that they comprise a casing, an exhaust air channel for leading exhaust air through the casing of the air supply unit, a supply air channel for leading supply air through the casing of the air supply unit and, in addition, in the casing a heat exchanger that comprises a rotating (rotatable) heat exchanger for transferring heat energy from the exhaust air flowing in the exhaust air channel at least partially to the supply air flowing in the supply air channel.

Numerous heat transfer units using the heat pump principle are also known previously. For example patent publication FR2355248 describes an air supply system with a heat pump and a heat exchanger. The heat interchangers of the heat pump have been placed so that the supply air and the exhaust air are lead through the heat exchanger before the heat interchanger. The present system is suitable predominantly for heating supply air by using exhaust air. In the present arrangement, exhaust air is in heating use cooled by using the heat exchanger before the air is lead to the heat interchanger. The efficiency of the heat pump thus remains unoptimal for heating use.

EP 0055000 also depicts an air supply system that comprises an air interchanger. The system comprises a heat pump module that transfers heat between supply and exhaust air streams by using an evaporator and a condenser. Also publications US44655278 and US6038879 present air conditioning systems that are based on a heat pump. Furthermore, air supply units in which a heat pump module has been combined with a plate heat exchanger are known in the art.

### Brief Description of the Invention

The object of the invention is to provide an air supply unit that has a relatively simple structure and a compact size, a better temperature efficiency than the prior art air supply units and that can be used efficiently at least for heating supply air.

The object of the invention is achieved with an air supply unit according to independent claim 1.

The preferred embodiments of the invention are present in the dependent claims.

The invention is based on that the casing of the air supply unit is provided with a heat pump in addition to a rotating, in other words rotatable, heat exchanger. From hereon, the term "rotating heat exchanger" refers to a rotatable heat exchanger the functioning of which may be based on for instance regenerative heat recovery. By using the heat pump, a better temperature efficiency in comparison to prior air supply unit can be achieved in the air supply unit according to the present invention. The first heat interchanger of the heat pump is adapted to reside in the exhaust air channel between the first inlet and the rotating heat exchanger. Such location for the first heat interchanger provides the advantage that the first heat interchanger resides in such location in the exhaust air stream of the exhaust air channel where the temperature of the exhaust air is the highest, i.e., before the heat exchanger. Therefore, maximum amount of heat energy may be transferred to the refrigerant of the heat pump in heating the supply air.

The apparatus according to some embodiments of the present invention may also be used for cooling supply air. The apparatus according to some embodiments may advantageously also be used for heating water using heat energy extracted from supply air or exhaust air.

The use of rotating heat exchanger of the apparatus according to some embodiments of the present invention may be adapted according to the current use of the air supply unit. For example when cooling supply air and simultaneously heating water using energy extracted from the supply air, the heat exchanger may act as a supplementary cooler of the supply air if the exhaust air is colder than the supply air. If the apparatus is used for cooling supply air only, the rotating heat exchanger may be stopped. Now the transfer of heat through the rotating heat exchanger is prevented without the need of bypassing the heat exchanger by leading the air streams through separate, space-consuming air channels, as would be necessary for example if the air supply unit was equipped with the prior art combination of a heat pump and a plate heat exchanger.

In a preferred embodiment of the present invention, the second heat interchanger of the heat pump is adapted to reside in the second air channel between the second outlet and the rotating heat exchanger.

In a preferred embodiment of the present invention, the heat pump comprises members for altering the flow direction of the refrigerant. In such preferred embodiment, the heat pump may be used in wintertime for heating the supply air by leading heat energy from the exhaust air flowing in the exhaust air channel to the supply air flowing in the supply air channel, and correspondingly in summertime for cooling the supply air by leading heat energy from the supply air flowing in the supply air channel to the exhaust air flowing in the exhaust air channel. In some preferred embodiments of the present invention, heat energy may also be transferred to water.

In a preferred embodiment of the invention the air supply unit comprises a supply air filter for filtering the supply air.

In a preferred embodiment of the invention the air supply unit comprises an exhaust air filter for filtering the exhaust air.

In a preferred embodiment of the invention the air supply unit comprises a supply air fan for effecting flow of supply air in the supply air channel.

In a preferred embodiment of the invention the air supply unit comprises an exhaust air fan for effecting flow of exhaust air in the exhaust air channel.

In a preferred embodiment of the invention, the air supply unit comprises an arrangement for transferring heat energy from supply and/or exhaust air to hot water. For example in wintertime at least part of the heat energy extracted from the exhaust air may be transferred to the hot water system for heating the hot water. Correspondingly, in the summertime, at least part of the heat energy extracted from the supply air may be transferred to the hot water system for heating the hot water. The arrangement for transferring at least part of the heat energy extracted from the supply and/or the exhaust air to hot water system for heating the hot water is advantageously, but not necessarily, adapted to function together with the heat pump in such a way that the heat pump is provided with connectors for connecting a water heat interchanger functionally to the heat pump.

### List of Figures

In the following some preferred embodiments of the invention are described in greater detail by referring to the enclosed figures, where
Figure 1 depicts an air supply unit according to a first embodiment of the present invention,

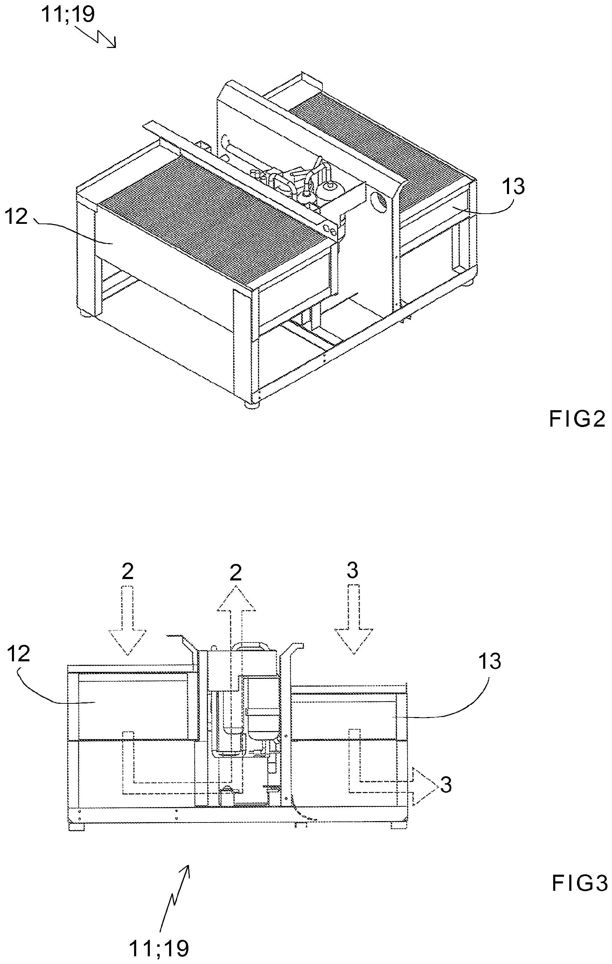

Figure 2 depicts the front view of the heat pump unit of the air supply unit of Figure 1,
Figure 3 depicts the side view and functionality of the heat pump unit of Figure 2,

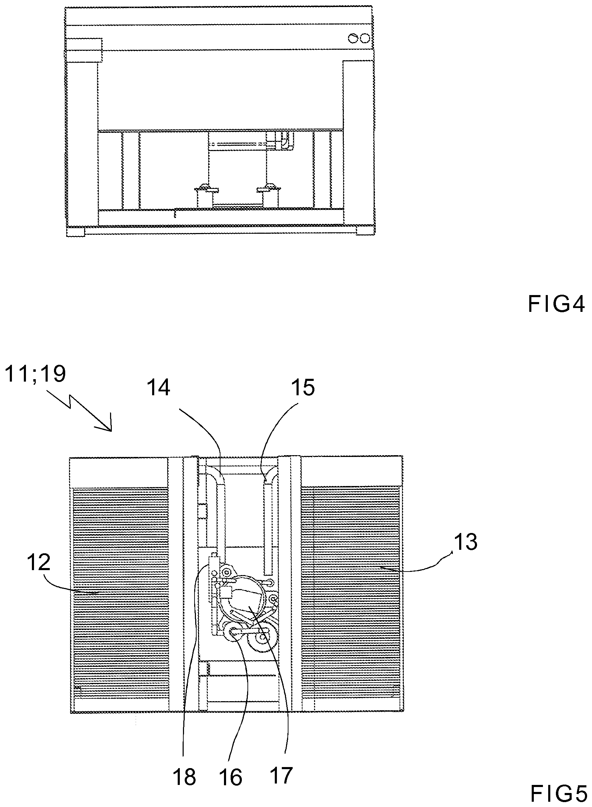

Figure 4 depicts the top view of the heat pump unit of the Figure 2,
Figure 5 depicts the heat pump unit of Figure 2 from another view angle,
Figure 6 depicts the operating principle of a second preferred embodiment of the air supply unit,
Figure 7 depicts the operating principle of a third preferred embodiment of the air supply unit, and
Figure 8 depicts the operating principle of a fourth preferred embodiment of the air supply unit.

### Detailed Description of the Invention

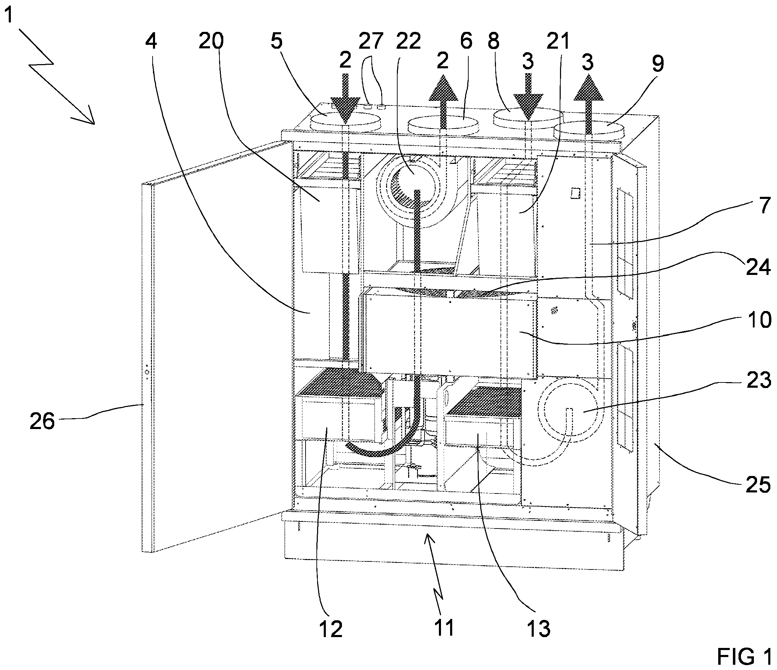

Figure 1 depicts an air supply unit 1 for extracting heat energy (not shown in the figures) from exhaust air 2 and transferring the heat energy to supply air 3.

The air supply unit 1 comprises a casing 25.

In casing 25, the air supply unit 1 comprises an exhaust air channel 4 for leading exhaust air 2 through the casing 25 of the air supply unit 1.

The exhaust air channel 4 has a first inlet 5 for leading exhaust air 2 into the exhaust air channel 4 and a first outlet 6 for removing the exhaust air 2 from the exhaust air channel 4. In figure 1, the first inlet 5 and the first outlet 6 are equipped with belled pipes (not indicated by a reference number) for connecting the air supply unit 1 for example with air conditioning channels or similar ducts.

In the air supply unit 1 shown in figure 1, the exhaust air channel 4 is composed of the walls, separation walls, bottom and ceiling of the casing 25 of the air supply unit 1. The exhaust air channel 4 of the air supply unit 1 may also comprise air ducts (not shown in figures) for leading the exhaust air 2 through the casing 25 of the air supply unit 1 or between the devices located in the casing 25 of the air supply unit 1.

In addition, the air supply unit 1 comprises in casing 25 a supply air channel 7 for leading supply air 3 through the casing 25 of the air supply unit 1.

The supply air channel 7 has a second inlet 8 for leading the supply air 3 into the supply air channel 7, and a second outlet 9 for removing the supply air 3 from the supply air channel 7.

In figure 1, the second inlet 8 and the second outlet 9 are equipped with belled pipes (not indicated by reference number) for connecting the air supply unit with air conditioning channels or other such ducts.

In the air supply unit 1 shown in figure 1, the supply air channel 7 is composed of the walls, separation walls, bottom and ceiling of the casing 25 of the air supply unit 1. It is also possible that the supply air channel 7 of the air supply unit 1 comprises air ducts (not shown in the figures) for leading the supply air 3 through the air supply unit 1 or between the devices located in the casing 25 of the air supply unit 1.

In casing 25, the air supply unit 1 further comprises a heat exchanger 10 for transferring heat energy of exhaust air 2 flowing in exhaust air channel 4 at least partially into the supply air 3 flowing in the supply air channel 7.

The air supply unit 1 also comprises a heat pump 11 in the casing 25.

The heat pump 11 has a first heat interchanger 12 which has a first interior (not shown in figures) for refrigerant (not shown in figures). The first heat interchanger 12 of the heat pump 11 acts either as the evaporator of the heat pump 11 or as the condenser of the heat pump 11, depending on whether the heat pump is used for heating the supply air 3 or for cooling the supply air 3.

In addition, the heat pump 11 is provided with a second heat interchanger 13 which has a second interior (not shown in the figures) for refrigerant. The second heat interchanger 13 of the heat pump 11 acts as the evaporator of the heat pump 11 or as the condenser of the heat pump 11, depending on whether the heat pump is used for heating the supply air 3 or for cooling the supply air 3.

The heat pump 11 also has a first fluid tube 14 for leading the refrigerant between the first interior of the first heat interchanger 12 and the second interior of the second heat interchanger 13.

The heat pump 11 also has a second fluid tube 15 for leading the refrigerant between the second interior of the second heat interchanger 13 and the first interior of the first heat interchanger 12.

The heat pump 11 also has an expansion device 16 for effecting a pressure difference between the first interior and the second interior, and a compressor 17 for circulating refrigerant from the first heat interchanger 12 to the second heat interchanger 13 and correspondingly from the second heat interchanger 13 to the first heat interchanger 12.

The expansion device 16 comprises advantageously but not necessarily an electronic expansion valve 34 by which the pressure difference between the first interior and the second interior can be controlled.

The first heat interchanger 12 of the heat pump 11 is adapted to reside in the exhaust air channel 4 so that heat energy may be transferred between the exhaust air 2 flowing in the exhaust air channel 4 and the refrigerant flowing in the first heat interchanger 12 of the heat pump 11.

In figure 1, the first heat interchanger 12 is adapted to reside between the first inlet 5 and heat exchanger 10 in the exhaust air channel 4.

The second heat interchanger 13 of the heat pump 11 is adapted to reside in the supply air channel 7 so that heat energy may be transferred between the supply air 3 flowing in the supply air channel 7 and the refrigerant flowing in the second heat interchanger 13 of the heat pump 11.

In figure 1, the second heat interchanger 13 is adapted to reside between the second outlet 9 and the heat exchanger 10 in the supply air channel 7.

Advantageously, but not necessarily, the heat pump 11 comprises an arrangement for changing the flow direction of the refrigerant so that the heat pump 11 may be used both for heating the supply air 3 and for cooling the supply air 3. The heat pump 11 may for example comprise a four-way valve 18 for altering the flow direction of the refrigerant.

In summertime, when the supply air 3 is cooled, the second heat interchanger 13 residing in the supply air channel 7 acts as an evaporator, absorbing into itself heat energy from the supply air 3 flowing in the supply air channel 7, and the first heat interchanger 12 residing in the exhaust air channel 4 acts as the condenser of the heat pump 11, transferring heat energy to the exhaust air 2 flowing in the exhaust air channel 4. At wintertime, when the supply air 3 is heated, the first interchanger 12 acts as the evaporator of the heat pump 11, absorbing into itself heat energy from the exhaust air 2 flowing in the exhaust air channel, and the second heat interchanger 13 residing in the supply air channel 7 acts as the condenser of the heat pump, transferring heat energy to the supply air 3 flowing in the supply air channel 7.

Because the functioning of the heat pump is as such known to a person skilled in the art, the operating principle of a heat pump is not described herein in more detail.

The air supply unit 1 according to the present invention comprises advantageously, but not necessarily, an arrangement for transferring heat energy extracted from exhaust air 2 and/or supply air 3 at least partially to the hot water system for heating the hot water 31. For example at wintertime at least part of the heat energy extracted from exhaust air 2 may be transferred to the hot water system for heating the hot water 31 and correspondingly in summertime at least part of the heat energy extracted from supply air 3 may be transferred to the hot water system for heating the hot water 31.

The present arrangement for transferring heat energy extracted from exhaust air 2 and/or supply air 3 at least partially for heating hot water of a hot water system comprises advantageously, but not necessarily, a water heat exchanger 28 through which the refrigerant of the heat pump 11 may be lead when the refrigerant flows in the heat pump 11 between the first heat interchanger 12 and the second heat interchanger 13 for transferring the heat energy absorbed into the refrigerant of the heat pump 11 for heating the hot water 31 of the hot water system.

The present arrangement for transferring the heat energy extracted from exhaust air 2 and/or supply air 3 at least partially for heating hot water of a hot water system is advantageously, but not necessarily, adapted to function together with the heat pump 11 so that the heat pump 11 is provided with connectors (not shown in the figures) for connecting the water heat exchanger functionally with the heat pump 11 so that the refrigerant of the heat pump 11 may be lead to the water heat exchanger 28.

If the air supply unit 1 according to the invention comprises a water heat exchanger 28 or if the heat pump 11 of the air supply unit 1 according to the invention comprises connectors for connecting the water heat exchanger 28 functionally with the heat pump 11, the air supply unit 1 according to the invention comprises advantageously, but not necessarily, a bypass arrangement for alternatively leading the refrigerant of the heat pump 11 through the water heat exchanger 28 when the refrigerant is led between the first heat interchanger 12 and the second heat interchanger 13 of the heat pump 11, or past the water heat exchanger 28 when the refrigerant is led between the first heat interchanger 12 and the second heat interchanger 13 of the heat pump 11.

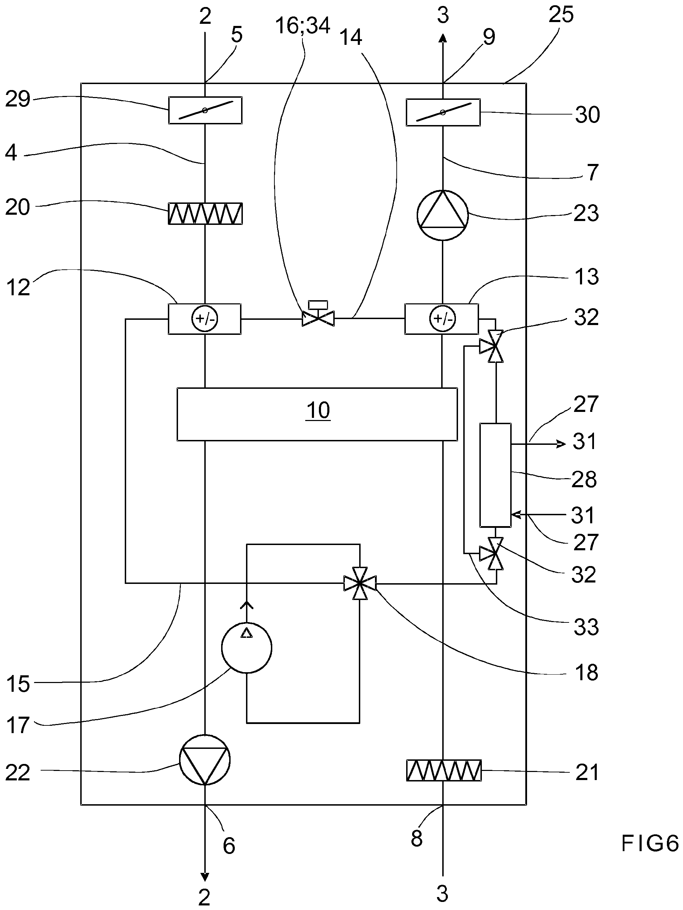

In figure 6 the mentioned bypass arrangement comprises three-way valves 32 and a fluid pipe 33 connected to the three-way valves 32 for leading the refrigerant of the heat pump past the water heat exchanger 28. It is also possible that the refrigerant of the heat pump 11 always flows through the water heat exchanger 28 and that heat energy is transferred from the refrigerant to the hot water 31 if hot water 31 is flowing through the water heat exchanger 28.

Figure 6 presents a part of an arrangement where heat absorbed into refrigerant in the second heat exchanger 13 in supply air channel 7 or, correspondingly, in the exhaust air channel 4 may be lead out of the refrigerant circuit of the heat pump 11 through the water heat exchanger 28 arranged into the heat pump 11.

The air supply unit 1 shown in figure 6 comprises a water heat exchanger 28 for transferring heat energy directly between refrigerant and hot water. Alternatively, the air supply unti may comprise a water heat exchanger 28 for transferring heat energy indirectly between refrigerant and water/anti-freeze solution, where the water/anti-freeze liquid is used for transferring the heat energy for example to hot water in a boiler by leading the hot water/anti-freeze liquid through the boiler.

The water heat exchanger 28 has a third interior (not shown in the figures) for refrigerant and fourth interior (not shown in the figures) for hot water or water/anti-freeze solution. In figure 6, the third interior of the water heat exchanger 28 comprises third pipe connectors for leading the refrigerant of the heat pump 11 into the third interior of the water heat exchanger 28. In figure 6, the fourth interior of the water heat exchanger 29 comprises fourth pipe connectors for leading hot water or water/anti-freeze solution to the fourth interior of the third heat exchanger 29.

The refrigerant vaporized in the first heat interchanger 12 or the second heat interchanger 13 is condensed into liquid in the water heat exchanger 28 by using hot water or water/anti-freeze solution when heat energy is transferred in the water heat exchanger 28 to the hot water or water/anti-freeze solution.

In summertime, when supply air 3 is cooled by using heat pump 11, it may for energy saving reasons be useful to use the exhaust air 2 that is cooler than outdoor air, i.e. supply air 3, to lower the temperature of the supply air 3 flowing to the second heat interchanger 13, and to use the heat energy extracted from the supply air 3 by using the second heat interchanger 13 of the heat pump 11 residing in supply air channel 7 for heating hot water so that heat would not be transferred through the first heat interchanger 12 in the exhaust channel 4 to exhaust air 2 and heat the exhaust air 2 coming to the rotating heat transfer element 24 of the heat exchanger 10. When heat energy is transferred into how tater, the rotating heat transfer element 24 of the heat exchanger 10 is advantageously, although not necessarily, rotated at full speed, transferring heat energy from the warm supply air 3 flowing in the supply air channel 7 into exhaust air 2 flowing in the exhaust air channel 4, the exhaust air being cooler than the supply air. If the heat energy extracted from the supply air 3 is not transferred into hot water but for instance into exhaust air 2, the rotating heat transfer element 24 may be stopped, if necessary.

Figure 6 depicts the operating principle of a second preferred embodiment of the air supply unit according to the invention, in which the water heat exchanger 28 is located in the exhaust air side of the air supply unit.

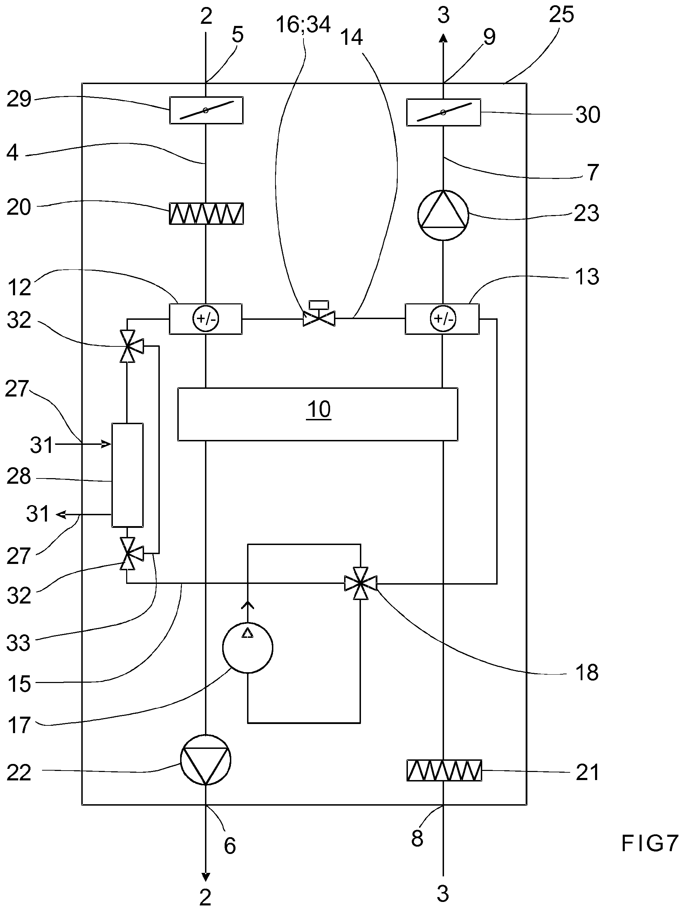

Figure 7 depicts the operating principle of a third preferred embodiment of the air supply unit according to the invention, in which the water heat exchanger 28 is located in the supply air side of the air supply unit.

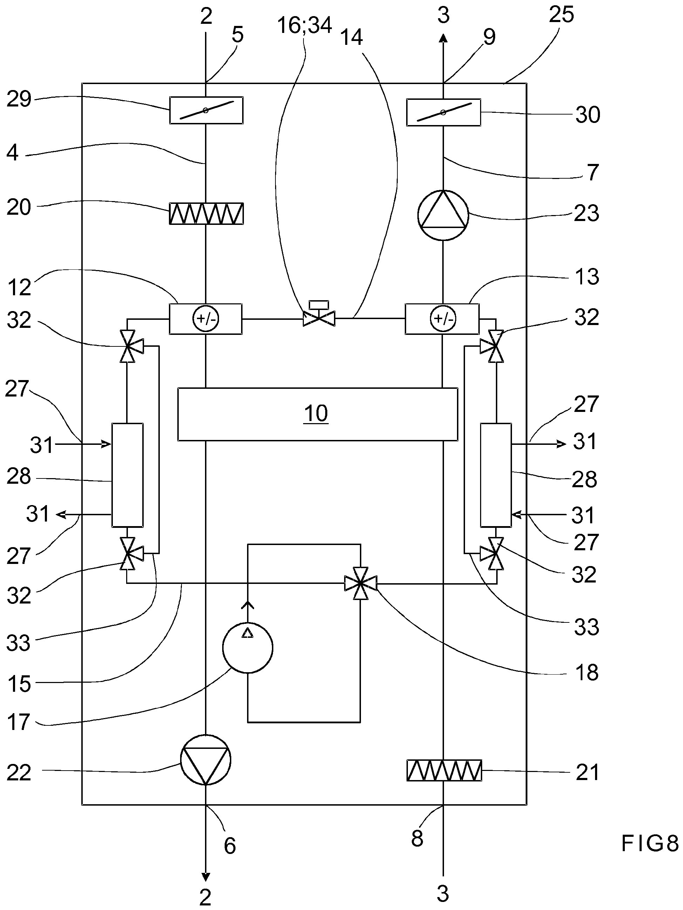

Figure 8 depicts the operating principle of another preferred embodiment of the air supply unit according to the invention, in which one water heat exchanger 28 is located in the exhaust air side of the air supply unit and a second water heat exchanger 28 is located in the supply air side of the air supply unit.

Figure 1 presents connectors 27 for connecting a hot water system to the air supply unit so that cold water or water/anti-freeze liquid may be led into a water condenser 28 of the air supply unit of to the invention for heating of water or water/anti-freeze solution.

The relative placing of the heat pump unit 11, heat interchangers 12 and 13 and the heat exchanger 10 of the invention also enables improvements in the manufacturing and serviceability of the air supply unit 1. In the figures, the heat pump 11 forms a heat pump unit 19 that is detachable from the air supply unit 1. In the figures, heat pump 11 forms a heat pump unit 19 that is detachably adapted in the casing 25 of the air supply unit 1. This enables for instance the manufacturing of the heat pump unit separately from the manufacturing of the other components of the air supply unit. Further, the serviceability of the air supply unit may become easier and/or more efficient as the heat pump unit with the heat interchangers can be detached as one unit for service that may be performed in some other location. The special tools and service skills that may be required for servicing a heat pump may thus not be necessarily needed at the installation location of the air supply unit.

The air supply unit 1 comprises advantageously, but not necessarily, a supply air filter 21 for filtering the supply air 3. The supply air filter 21 is advantageously, but not necessarily, detachable for example for cleaning or changing. The supply air filter 21 is located advantageously, but not necessarily, in the supply air channel 7.

The filtering of the supply air 3 may also be arranged by using a supply air filter that is provided separately from the air supply unit 1.

The air supply unit 1 comprises advantageously, but not necessarily, an exhaust air filter 20 for filtering the exhaust air 2. The exhaust air filter 20 is advantageously, but not necessarily, detachable for example for cleaning or changing. The exhaust air filter 20 is located advantageously, but not necessarily, in the exhaust air channel 4.

The filtering of the exhaust air 3 may also be arranged by using an exhaust air filter that is provided separately from the air supply unit 1.

The air supply unit 1 comprises advantageously, but not necessarily, a supply air fan 23 for effecting flow of supply air in the supply air channel 7. The supply air fan 23 is arranged in the air supply unit 1 of Figure 1 to suck the supply air 3 through both the supply air filter 21 and second heat interchanger 13.

It is also possible that the air supply unit 1 of the invention is not equipped with supply air fan 23 and that the flow of supply air 3 is effected, instead, by using a supply air fan 23 that is arranged to be separate from the air supply unit 1.

The air supply unit 1 comprises advantageously, but not necessarily, an exhaust air fan 22 for effecting flow of exhaust air in the exhaust air channel 4. In the air supply unit 1 of Figure 1, the exhaust air fan 22 is adaptedto suck the exhaust air 2 through both the exhaust air filter 20 and first heat interchanger 12.

It is also possible that the air supply unit 1 according to the invention is not equipped with exhaust air fan 22, but the flow of exhaust air 2 is effected by using an exhaust air fan 22 provided separately from the air supply unit 1.

The heat exchanger 10 of air supply unit 1 of figure 1 is based on regenerative heat recovery and comprises a rotating heat transfer element 24 that is rotatable around its axis so that first part of the rotating heat transfer element 24 resides first in the exhaust air channel 4 and is heatable there by using exhaust air 2 flowing in the exhaust air channel 4, in other words, heat energy is stored in the first part of the rotating heat transfer element 24 when it is located in the exhaust air flow 2 of the exhaust channel 4, after which the heat exchanger 10 and the first part of the rotating heat transfer element 24 rotate around the axis and the first part of the rotating heat transfer element 24 moves from the exhaust air channel 4 to the supply air channel 7 and conveys the heat energy from the exhaust air channel stored in the first part of the heat transfer element 24 to the flowing supply air 3. Because the functional principle of such rotating heat transfer element 24 is known to a person skilled in the art, it is not described herein in greater detail.

The rotating heat transfer element 24 is advantageously, but not necessarily, adapted to rotate continuously. The air supply unit 1 may be equipped with means for adjusting the rotating speed of the rotating heat transfer element 24 in a continuous manner. In some uses, the heat transfer element 24 may be stopped, thus preventing the transfer of heat between supply air channel 7 and exhaust air channel 4.

The rotating heat transfer element 24 of Figure 1 is a cylinder-shaped piece that comprises channels (not indicated by a reference number), which may store heat energy from the exhaust air 2 flowing in exhaust air channel 4 and convey heat energy to the supply air 3 flowing in the supply air channel 7.

The rotating heat transfer element 24 is manufactured of such material, for example aluminum, that is able to receive heat energy from the exhaust air 2 flowing in the exhaust air channel 4 and that may store the heat energy and convey the stored heat energy to the supply air 3 flowing in the supply air channel 7.

The casing 25 of the air supply unit 1 of Figure 1 is equipped with a service hatch 26, which may be opened. In figure 1 the air supply unit is shown with the service hatch open.

The air supply unit 1 of the invention is advantageously, but not necessarily, equipped with a gate valve 30 for preventing the flow of supply air 3 in the supply air channel 7. The said gate valve is advantageously, but not necessarily, located in the supply air channel 7 between the second inlet 8 and the supply air filter 21.

The air supply unit 1 of the invention is advantageously, but not necessarily, equipped with a gate valve 30 for preventing the flow of exhaust air 2 in the exhaust air channel 4. The said gate valve is advantageously, but not necessarily, located in the exhaust air channel 4 between the first outlet 6 and exhaust air filter fan 22.

Significant advantages over prior art devices may be achieved by the devices according to the different embodiments of the invention. Especially, improvements have been observed in the COP values (Coefficient of Performance), in which improvements of several tens of per cent, e.g. at least 20%, 50% or even over 100% may be achieved over the prior art devices. Further advantages may be achieved with respect to more efficient manufacturing and easier serviceability.

It is obvious to a person skilled in the art that as the technology evolves, the basic idea of the invention may be implemented in many different ways. The invention and its embodiments are therefore not limited to the above-described examples, but they may vary within the scope of the patent claims.

## Claims

1. An air supply unit (1) for transferring heat energy between exhaust air (2) and supply air (3), the air supply unit (1) comprising
- a casing (25),
- in the casing (25) an exhaust air channel (4) for leading exhaust air (2) through the casing (25) of the air supply unit (1), the exhaust air channel (4) having a first inlet (5) for leading exhaust air (2) into the exhaust air channel (4) and a first outlet (6) for leading exhaust air (2) out of the exhaust air channel (4),
- in the casing (25) a supply air channel (7) for leading supply air (3) through the casing (25) of the air supply unit (1), the supply air channel (7) having a second inlet (8) for leading supply air (3) into the supply air channel (7) and a first outlet (9) for leading supply air (3) out of the supply air channel (7),
- in the casing (25) a heat pump (11) having a first heat interchanger (12) having a first interior for refrigerant, and a second heat interchanger (13) having a second interior for refrigerant, a first fluid tube (14) for leading refrigerant between the first interior of the first heat interchanger (12) and the second interior of the second heat interchanger. (13), a second fluid tube (15) for leading refrigerant between the second interior of the second heat interchanger (13) and the first interior of the first heat interchanger (12), an expansion device (16) for effecting a pressure difference between the first and the second interior, and a compressor (17) for circulating the refrigerant from the first heat interchanger (12) to the second heat interchanger (13) and from the second interchanger (13) to the first interchanger (12), and
- that the second heat interchanger (13) of the heat pump (11) is adapted into the supply air channel (7) leading through the casing (25),
**characterized in that**
- the air supply unit (1) comprises in the casing (25) a heat exchanger (10) comprising a rotating heat transfer element (24) for transferring heat energy from exhaust air (2) flowing in the exhaust air channel (4) through the casing (25) at least partially to supply air (3) that flows through the casing (25) in the supply air channel (7), and
- that the first heat interchanger (12) of the heat pump (11) is adapted between the first inlet (5) and heat exchanger (10) in the exhaust air channel (4) leading through the casing (25).

2. The air supply unit according to claim 1, **characterized in that** the second heat interchanger (13) is adapted between the second outlet (9) and heat exchanger (10) in the supply air channel (7) leading through the casing (25).

3. The air supply unit according to claims 1 or 2, **characterized in that** it comprises members for altering the flow directionof the refrigerant of the heat pump (11).

4. The air supply unit according to any one of claims 1 to 3, **characterized in that** it comprises a supply air filter (21) for filtering the supply air (3).

5. The air supply unit according to any one of claims 1 to 4, **characterized in that** it comprises an exhaust air filter (20) for filtering the exhaust air (2).

6. The air supply unit according to any one of claims 1 to 5, **characterized in that** it comprises a supply air fan (23) for effecting the flow of supply air (3) in the supply air channel (7).

7. The air supply unit according to any one of claims 1 to 6, **characterized in that** it comprises an exhaust air fan (22) for effecting the flow of exhaust air (2) in the exhaust air channel (2).

8. The air supply unit according to any one of claims 1 to 7, **characterized in that** it comprises an arrangement for transferring heat energy extracted from exhaust air (2) at least partially to the hot water system for heating hot water (31).

9. The air supply unit according to any one of claims 1 to 8, **characterized in that** it comprises an arrangement for transferring heat energy extracted from supply air (3) at least partially to the hot water system for heating hot water (31).

10. The air supply unit according to claim 8 or 9, **characterized in that** it comprises a water heat exchanger (28) through which the refrigerant of the heat pump (11) and hot water (31) may be led for transferring the heat energy absorbed by the refrigerant of the heat pump (11) at least partially to the hot water (31).

11. The air supply unit according to claim 8 or 9, **characterized in that** it comprises a water heat exchanger (28) through which the refrigerant of the heat pump (11) and water/anti-freeze solution intended for heating hot water (31) may be led for transferring the heat energy absorbed by the refrigerant of the heat pump (11) at least partially to the water/anti-freeze solution intended for heating hot water.

12. The air supply unit according to claim 8 or 9, **characterized in that** the heat pump (11) comprises connectors for connecting a water heat exchanger (28) functionally to the heat pump so that the refrigerant of the heat pump (11) may be led to the water heat exchanger (28) for transferring the heat energy absorbed by the refrigerant at least partially to the hot water (31).

13. The air supply unit according to any one of claims 10 to 12, **characterized in that** it comprises an arrangement for leading the refrigerant of the heat pump (11) either through the water heat exchanger (28) when the refrigerant of the heat pump (11) is led between the first heat interchanger (12) and the second heat interchanger (13) or past the water heat exchanger (28) when the refrigerant of the heat pump (11) is led between the first heat interchanger (12) and the second heat interchanger (13).

14. The air supply unit according to any one of claims 1 to 13, **characterized in that** the heat pump (11) forms a heat pump unit (19) that is detachably adapted into the casing (25) of the air supply unit (1).

## Patentansprüche

1. Luftzufuhreinheit (1) zum Übertragen von Wärmeenergie zwischen Abluft (2) und Zuluft (3), wobei die Luftzufuhreinheit (1) aufweist:
- ein Gehäuse (25),
- in dem Gehäuse (25) einen Abluftkanal (4) zum Leiten von Abluft (2) durch das Gehäuse (25) der Luftzufuhreinheit (1), wobei der Abluftkanal (4) einen ersten Einlass (5) zum Leiten von Abluft (2) in den Abluftkanal (4) und einen ersten Auslass (6) zum Leiten von Abluft (2) aus dem Abluftkanal (4) hat,
- in dem Gehäuse (25) einen Zuluftkanal (7) zum Leiten von Zuluft (3) durch das Gehäuse (25) der Luftzufuhreinheit (1), wobei der Zuluftkanal (7) einen zweiten Einlass (8) zum Leiten von Zuluft (3) in den Zuluftkanal (7) und einen ersten Auslass (9) zum Leiten von Zuluft (3) aus dem Zuluftkanal (7) hat,
- in dem Gehäuse (25) eine Wärmepumpe (11) mit einem ersten Wärmeübertrager (12) mit einem ersten Innenraum für Kältemittel und einem zweiten Wärmeübertrager (13) mit einem zweiten Innenraum für Kältemittel, einem ersten Fluidrohr (14) zum Leiten von Kältemittel zwischen dem ersten Innenraum des ersten Wärmeübertragers (12) und dem zweiten Innenraum des zweiten Wärmeübertragers (13), einem zweiten Fluidrohr (15) zum Leiten von Kältemittel zwischen dem zweiten Innenraum des zweiten Wärmeübertragers (13) und dem ersten Innenraum des ersten Wärmeübertragers (12), einer Expansionsvorrichtung (16) zum Bewirken eines Druckunterschieds zwischen dem ersten und dem zweiten Innenraum, und einem Kompressor (17) zum Zirkulieren des Kältemittels von dem ersten Wärmeübertrager (12) zu dem zweiten Wärmeübertrager (13) und von dem zweiten Übertrager (13) zu dem ersten Übertrager (12), und
- dass der zweite Wärmeübertrager (13) der Wärmepumpe (11) in dem Zuluftkanal (7), der durch das Gehäuse (25) führt, eingerichtet ist,
**dadurch gekennzeichnet, dass**
- die Luftzufuhreinheit (1) in dem Gehäuse (25) einen Wärmetauscher (10) aufweist, der ein rotierendes Wärmeübertragungselement (24) zum Übertragen von Wärmeenergie aus Abluft (2), die in dem Abluftkanal (4) durch das Gehäuse (25) strömt, mindestens teilweise auf Zuluft (3), die in dem Zuluftkanal (7) durch das Gehäuse (25) strömt, aufweist, und
- dass der erste Wärmeübertrager (12) der Wärmepumpe (11) zwischen dem ersten Einlass (5) und dem Wärmetauscher (10) in dem Abluftkanal (4), der durch das Gehäuse (25) führt, eingerichtet ist.

2. Luftzufuhreinheit gemäß Anspruch 1, **dadurch gekennzeichnet, dass** der zweite Wärmeübertrager (13) zwischen dem zweiten Auslass (9) und dem Wärmetauscher (10) in dem Zuluftkanal (7), der durch das Gehäuse (25) führt, eingerichtet ist.

3. Luftzufuhreinheit gemäß Anspruch 1 oder 2, **dadurch gekennzeichnet, dass** sie Glieder zum Verändern der Strömungsrichtung des Kältemittels der Wärmepumpe (11) aufweist.

4. Luftzufuhreinheit gemäß einem der Ansprüche 1 bis 3, **dadurch gekennzeichnet, dass** sie einen Zuluftfilter (21) zum Filtern der Zuluft (3) aufweist.

5. Luftzufuhreinheit gemäß einem der Ansprüche 1 bis 4, **dadurch gekennzeichnet, dass** sie einen Abluftfilter (20) zum Filtern der Abluft (2) aufweist.

6. Luftzufuhreinheit gemäß einem der Ansprüche 1 bis 5, **dadurch gekennzeichnet, dass** sie ein Zuluftgebläse (23) zum Bewirken des Strömens der Zuluft (3) in dem Zuluftkanal (7) aufweist.

7. Luftzufuhreinheit gemäß einem der Ansprüche 1 bis 6, **dadurch gekennzeichnet, dass** sie ein Abluftgebläse (22) zum Bewirken des Strömens der Abluft (2) in dem Abluftkanal (2) aufweist.

8. Luftzufuhreinheit gemäß einem der Ansprüche 1 bis 7, **dadurch gekennzeichnet, dass** sie eine Anordnung zum Übertragen von Wärmeenergie, die der Abluft (2) entzogen ist, mindestens teilweise auf das Warmwassersystem zum Erhitzen von Warmwasser (31) aufweist.

9. Luftzufuhreinheit gemäß einem der Ansprüche 1 bis 8, **dadurch gekennzeichnet, dass** sie eine Anordnung zum Übertragen von Wärmeenergie, die der Zuluft (3) entzogen ist, mindestens teilweise auf das Warmwassersystem zum Erhitzen von Warmwasser (31) aufweist.

10. Luftzufuhreinheit gemäß Anspruch 8 oder 9, **dadurch gekennzeichnet, dass** sie einen Wasserwärmetauscher (28) aufweist, durch den das Kältemittel der Wärmepumpe (11) und Warmwasser (31) geleitet werden können, um die durch das Kältemittel der Wärmepumpe (11) absorbierte Wärmeenergie mindestens teilweise auf das Warmwasser (31) zu übertragen.

11. Luftzufuhreinheit gemäß Anspruch 8 oder 9, **dadurch gekennzeichnet, dass** sie einen Wasserwärmetauscher (28) aufweist, durch den das Kältemittel der Wärmepumpe (11) und Wasser/Gefrierschutzmittel-Lösung zum Erhitzen von Warmwasser (31) dazu geleitet werden können, die durch das Kältemittel der Wärmepumpe (11) absorbierte Wärmeenergie mindestens teilweise auf die Wasser/Gefrierschutzmittel-Lösung, die zum Erhitzen von Warmwasser bestimmt ist, zu übertragen.

12. Luftzufuhreinheit gemäß Anspruch 8 oder 9, **dadurch gekennzeichnet, dass** die Wärmepumpe (11) Verbindungselemente aufweist, um einen Wasserwärmetauscher (28) funktional so an die Wärmepumpe zu koppeln, dass das Kältemittel der Wärmepumpe (11) zu dem Wasserwärmetauscher (28) geleitet werden kann, um die durch das Kältemittel absorbierte Wärmeenergie mindestens teilweise auf das Warmwasser (31) zu übertragen.

13. Luftzufuhreinheit gemäß einem der Ansprüche 10 bis 12, **dadurch gekennzeichnet, dass** sie eine Anordnung aufweist, um das Kältemittel der Wärmepumpe (11) entweder durch den Wasserwärmetauscher (28) zu leiten, wenn das Kältemittel der Wärmepumpe (11) zwischen dem ersten Wärmeübertrager (12) und dem zweiten Wärmeübertrager (13) geleitet ist, oder an dem Wasserwärmetauscher (28) vorbei zu leiten, wenn das Kältemittel der Wärmepumpe (11) zwischen dem ersten Wärmeübertrager (12) und dem zweiten Wärmeübertrager (13) geleitet ist.

14. Luftzufuhreinheit gemäß einem der Ansprüche 1 bis 13, **dadurch gekennzeichnet, dass** die Wärmepumpe (11) eine Wärmepumpeinheit (19) bildet, die entnehmbar in dem Gehäuse (25) der Luftzufuhreinheit (1) eingerichtet ist.

## Revendications

1. Unité d'alimentation en air (1) pour transférer de l'énergie thermique entre air d'échappement (2) et air d'alimentation (3), l'unité d'alimentation en air (1) comprenant :
- un carter (25),
- dans le carter (25), un canal d'air d'échappement (4) pour guider l'air d'échappement (2) à travers le carter (25) de l'unité d'alimentation en air (1), le canal d'air d'échappement (4) ayant une première entrée (5) pour guider l'air d'échappement (2) dans le canal d'air d'échappement (4) et une première sortie (6) pour guider l'air d'échappement (2) hors du canal d'air d'échappement (4),
- dans le carter (25), un canal d'air d'alimentation (7) pour guider l'air d'alimentation (3) à travers le carter (25) de l'unité d'alimentation en air (1), le canal d'air d'alimentation (7) ayant une seconde entrée (8) pour guider l'air d'alimentation (3) dans le canal d'air d'alimentation (7) et une première sortie (9) pour guider l'air d'alimentation (3) hors du canal d'air d'alimentation (7),
- dans le carter (25), une pompe à chaleur (11) ayant un premier interchangeur de chaleur (12) ayant un premier intérieur pour réfrigérant et un second interchangeur de chaleur (13) ayant un second intérieur pour réfrigérant, un premier tube à fluide (14) pour guider le réfrigérant entre le premier intérieur du premier interchangeur de chaleur (12) et le second intérieur du second interchangeur de chaleur (13), un second tube à fluide (15) pour guider du réfrigérant entre le second intérieur du second interchangeur de chaleur (13) et le premier intérieur du premier interchangeur de chaleur (12), un dispositif d'expansion (16) pour établir une différence de pression entre le premier et le second intérieur, et un compresseur (17) pour faire circuler le réfrigérant du premier interchangeur de chaleur (12) au second interchangeur de chaleur (13) et du second interchangeur de chaleur (13) au premier interchangeur de chaleur (12), et
- le second interchangeur de chaleur (13) de la pompe à chaleur (11) est adapté dans le canal d'air d'alimentation (7) menant à travers le carter (25), **caractérisée en ce que**
- l'unité d'alimentation en air (1) comprend dans le carter (25) un échangeur de chaleur (10) comprenant un élément de transfert de chaleur rotatif (24) pour transférer de l'énergie thermique de l'air d'échappement (2) s'écoulant dans le canal d'air d'échappement (4) à travers le carter (25) au moins en partie pour fournir de l'air (3) qui s'écoule à travers le carter (25) dans le canal d'air d'alimentation (7), et
- le premier interchangeur de chaleur (12) de la pompe à chaleur (11) est adapté entre la première entrée (5) et l'échangeur de chaleur (10) dans le canal d'air d'échappement (4) menant à travers le carter (25).

2. Unité d'alimentation en air selon la revendication 1, **caractérisée en ce que** le second interchangeur de chaleur (13) est adapté entre la seconde sortie (9) et l'échangeur de chaleur (10) dans le canal d'air d'alimentation (7) menant à travers le carter (25).

3. Unité d'alimentation en air selon la revendication 1 ou 2, **caractérisée en ce qu'**elle comprend des éléments pour modifier la direction d'écoulement du réfrigérant de la pompe à chaleur (11).

4. Unité d'alimentation en air selon l'une quelconque des revendications 1 à 3, **caractérisée en ce qu'**elle comprend un filtre à air d'alimentation (21) pour filtrer l'air d'alimentation (3).

5. Unité d'alimentation en air selon l'une quelconque des revendications 1 à 4, **caractérisée en ce qu'**elle comprend un filtre à air d'échappement (20) pour filtrer l'air d'échappement (2).

6. Unité d'alimentation en air selon l'une quelconque des revendications 1 à 5, **caractérisée en ce qu'**elle comprend un ventilateur d'air d'alimentation (23) pour assurer l'écoulement d'air d'alimentation (3) dans le canal d'air d'alimentation (7).

7. Unité d'alimentation en air selon l'une quelconque des revendications 1 à 6, **caractérisée en ce qu'**elle comprend un ventilateur d'air d'échappement (22) pour assurer l'écoulement de l'air d'échappement (2) dans le canal d'air d'échappement (2).

8. Unité d'alimentation en air selon l'une quelconque des revendications 1 à 7, **caractérisée en ce qu'**elle comprend un agencement pour transférer de l'énergie thermique extraite de l'air d'échappement (2) au moins en partie au système d'eau chaude pour chauffer de l'eau chaude (31).

9. Unité d'alimentation en air selon l'une quelconque des revendications 1 à 8, **caractérisée en ce qu'**elle comprend un agencement pour transférer de l'énergie thermique extraite de l'air d'alimentation (3) au moins en partie au système d'eau chaude pour chauffer de l'eau chaude (31).

10. Unité d'alimentation en air selon la revendication 8 ou 9, **caractérisée en ce qu'**elle comprend un échangeur de chaleur d'eau (28) à travers lequel le réfrigérant de la pompe à chaleur (11) et de l'eau chaude (31) peuvent être acheminés pour transférer l'énergie thermique absorbée par le réfrigérant de la pompe à chaleur (11) au moins en partie à l'eau chaude (31).

11. Unité d'alimentation en air selon la revendication 8 ou 9, **caractérisée en ce qu'**elle comprend un échangeur de chaleur d'eau (28) à travers lequel le réfrigérant de la pompe à chaleur (11) et une solution d'eau/antigel destinée à chauffer de l'eau chaude (31) peuvent être acheminés pour transférer l'énergie thermique absorbée par le réfrigérant de la pompe à chaleur (11) au moins en partie à la solution d'eau/antigel destinée à chauffer de l'eau chaude.

12. Unité d'alimentation en air selon la revendication 8 ou 9, **caractérisée en ce que** la pompe à chaleur (11) comprend des raccords pour raccorder un échangeur de chaleur d'eau (28) fonctionnellement à la pompe à chaleur de sorte que le réfrigérant de la pompe à chaleur (11) puisse être acheminé à l'échangeur de chaleur d'eau (28) pour transférer l'énergie thermique absorbée par le réfrigérant au moins en partie à l'eau chaude (31).

13. Unité d'alimentation en air selon l'une quelconque des revendications 10 à 12, **caractérisée en ce qu'**elle comprend un agencement pour acheminer le réfrigérant de la pompe à chaleur (11) à travers l'échangeur de chaleur d'eau (28) lorsque le réfrigérant de la pompe à chaleur (11) est acheminé entre le premier interchangeur de chaleur (12) et le second interchangeur de chaleur (13) ou au-delà de l'échangeur de chaleur d'eau (28) lorsque le réfrigérant de la pompe à chaleur (11) est acheminé entre le premier interchangeur de chaleur (12) et le second interchangeur de chaleur (13).

14. Unité d'alimentation en air selon l'une quelconque des revendications 1 à 13, **caractérisée en ce que** la pompe à chaleur (11) forme une unité de pompe à chaleur (19) qui est adaptée de manière détachable dans le carter (25) de l'unité d'alimentation en air (1).
